Europäisches Patentamt

(19) European Patent Office

Office européen des brevets

(11) Numéro de publication: **0 240 842**
**B1**

(12) **FASCICULE DE BREVET EUROPEEN**

(45) Date de publication du fascicule du brevet:
**14.06.89**

(51) Int. Cl.⁴: **A47J 43/044,** A47J 43/08

(21) Numéro de dépôt: **87104397.2**

(22) Date de dépôt: **25.03.87**

(54) Appareil électroménager pour préparations culinaires telles que sauces ou pâtisseries.

(30) Priorité: **01.04.86 FR 8604590**

(43) Date de publication de la demande:
**14.10.87 Bulletin 87/42**

(45) Mention de la délivrance du brevet:
**14.06.89 Bulletin 89/24**

(84) Etats contractants désignés:
**AT BE CH DE ES GB IT LI NL SE**

(56) Documents cités:
**EP-A- 0 191 161
DE-B- 1 037 089
FR-A- 1 043 011
US-A- 1 824 328
US-A- 2 184 085
US-A- 4 613 086**

(73) Titulaire: **MOULINEX, 7 à 15, rue Jules-Ferry,
F-93171 Bagnolet Cédex(FR)**

(72) Inventeur: **Weiss, Roger, Sté Moulinex 11, rue
Jules-Ferry, F-93170 Bagnolet(FR)**

(74) Mandataire: **May, Hans Ulrich, Dr., Patentanwalt Dr. H.U.
May Thierschstrasse 27, D-8000 München 22(DE)**

ACTORUM AG

## Description

L'invention se rapporte aux appareils électroménagers qui sont destinés aux préparations culinaires telles que les sauces ou les pâtisseries et qui comportent un socle de réception d'un bol de travail amovible, au moins un outil rotatif tel qu'un fouet pénétrant dans ce bol, une colonne s'élevant dudit socle et contenant un moteur, cette colonne portant en son sommet un bras qui s'étend horizontalement audessus du bol et qui renferme un réducteur de vitesse accouplé au moteur et comprenant une roue de sortie qui vient en prise avec une roue d'entraînement d'un arbre portant l'outil rotatif.

L'invention concerne, plus précisément, les appareils de ce genre dans lesquels la roue d'entraînement de l'arbre porte-outil ainsi que cet arbre sont contenus dans un carter monté amovible sur un siège ménagé en bout dudit bras, de telle sorte que, lors de la mise en place du carter sur ledit siège, ladite roue d'entraînement vienne en prise avec ladite roue de sortie du réducteur. Un appareil de ce type est décrit dans la demande de brevet français n° 85 00981 (à la quelle correspond le EP-A 0 191 161) déposée le 24 janvier 1985 et publiée après la date de priorité de la pésente demande.

Dans cet appareil, la roue de sortie du réducteur est accessible à l'usager lorsque le carter porte-outil n'est pas placé sur son siège. Si alors l'appareil est mis en en marche, cette roue risque de provoquer des blessures ou autres dommages.

L'invention a notamment pour but de supprimer ces risques.

Dans un appareil selon l'invention, le carter est retenu sur son siège par un verrou mobile susceptible d'occuper, soit une position de verrouillage pour laquelle il assure l'assemblage du carter avec le bras, soit une position de déverrouillage pour laquelle le carter est libéré,et ce verrou est en relation avec la touche de commande d'un interrupteur d'alimentation du moteur de telle sorte que, pour ladite position de verrouillage, ledit interrupteur soit fermé et le moteur soit alimenté, et que, pour ladite position de déverrouillage, ledit interrupteur soit ouvert et l'alimentation du moteur soit donc interrompue.

Ainsi, le moteur ne peut pas être mis en marche tant que le carter n'est pas convenablement monté et verrouillé sur son siège.

Les caractéristiques et avantages de l'invention ressortiront d'ailleurs de la description qui va suivre, à titre d'exemple, en référence aux dessins annexés dans lesquels :

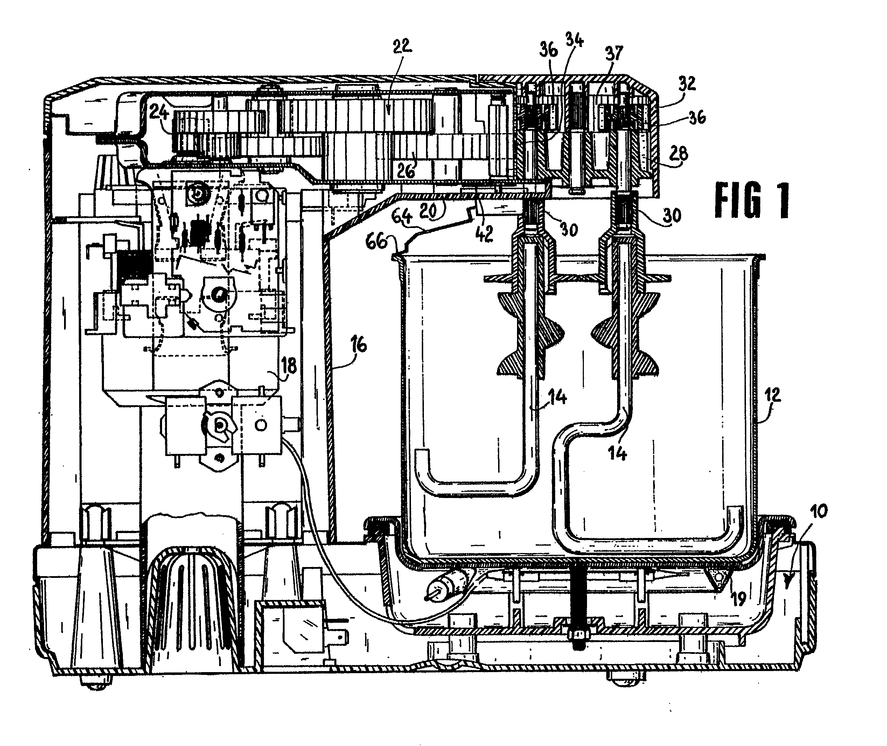

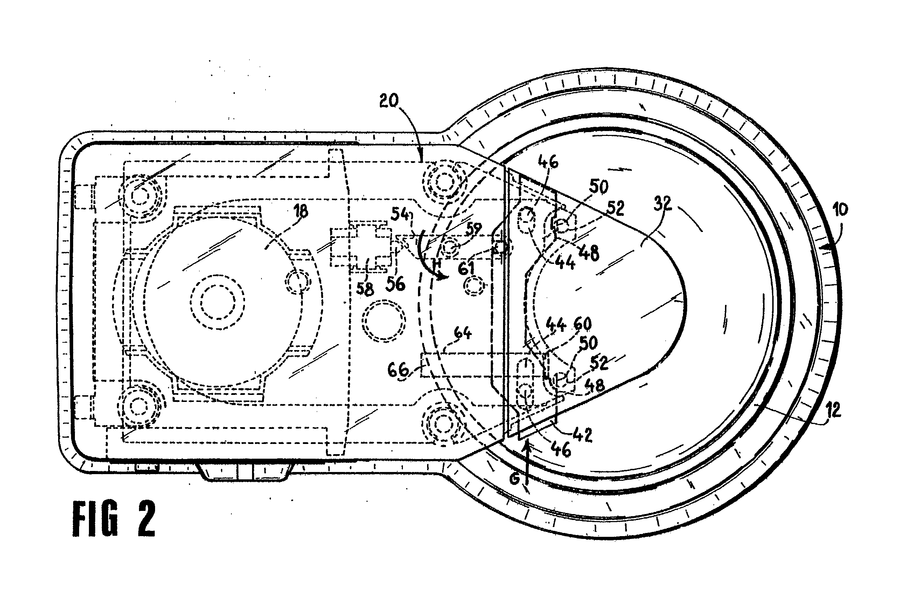

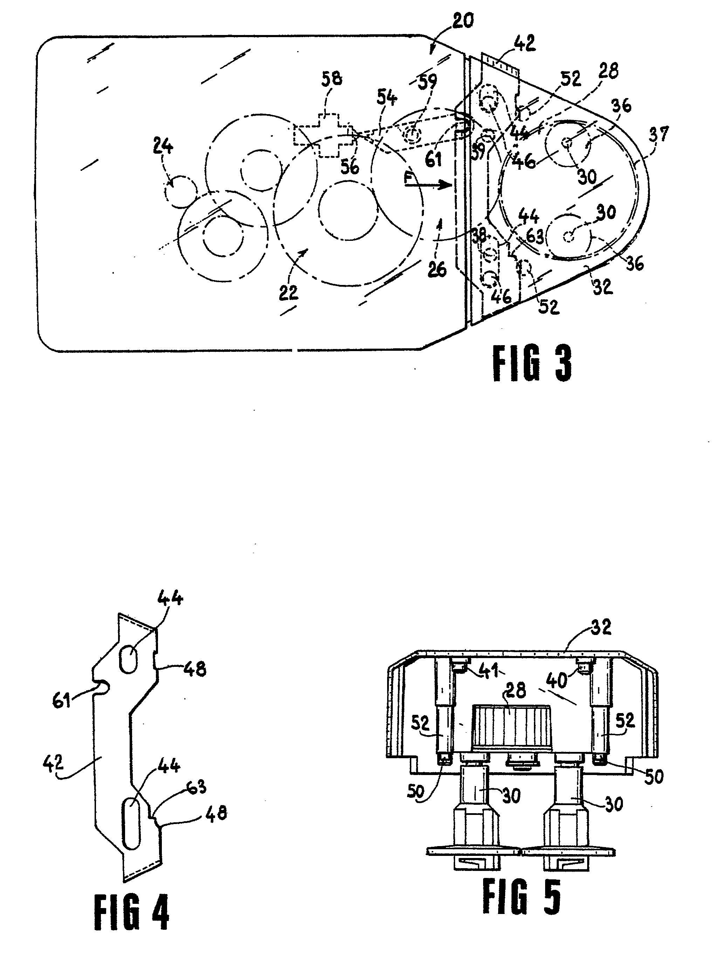

la figure 1 est une coupe verticale longitudinale d'un appareil de préparation culinaire conforme à l'invention, avec le carter porte-outil mis en place sur son siège, et avec le bol de travail mis en place sur le socle ; la figure 2 est une vue de dessus de cet appareil ; la figure 3 est une vue de dessus du bras et du carter, représentant notamment, en traits interrompus, le réducteur de vitesse ; la figure 4 est une vue de dessus du verrou seul; la figure 5 est une vue en élévation du carter selon la flèche F de la figure 3 ; les figures 6, 7 et 8 représentent en coupe un dispositif de sécurité complémentaire associé au verrou, en les trois positions qu'il occupe respectivement en l'absence du carter, en présence du carter mais absence du bol, et en présence du carter ainsi que du bol.

L'appareil de préparation culinaire représenté aux figures 1 et 2 comporte un socle 10 de réception d'un bol de travail amovible 12, deux outils rotatifs 14 tels que des fouets pénétrant dans le bol 12, et une colonne 16 s'élevant du socle 10 et contenant un moteur 18. Pour assurer la cuisson de la préparation culinaire contenue dans le bol 12, le socle 10 comporte une résistance électrique 19 de chauffage du fond du bol. La colonne 16 porte en son sommet un bras 20 qui s'étend horizontalement au dessus du bol 12 et qui renferme un réducteur de vitesse à engrenages 22 accouplé à l'arbre 24 du moteur 18 et comprenant, en particulier, une roue dentée de sortie 26.

Cette roue de sortie 26 vient en prise avec une roue dentée 28 d'entraînement de deux arbres 30 portant respectivement les outils 14. La roue d'entraînement 28 et les arbres porte-outil 30 sont contenus dans un carter 32 monté amovible sur un siège 34 ménagé en bout du bras 20 de telle sorte que, lors de la mise en place du carter 32 sur le siège 34, la roue d'entraînement 28 vienne en prise avec la roue de sortie 26. La roue d'entraînement 28 porte deux pignons planétaires 36 qui sont solidaires des arbres porte-outil 30 et qui engrènent avec une denture fixe 37 interne au carter 32.

Le siège 34 de réception du carter 32 comprend deux trous espacés 38 et 39 pratiqués dans la face supérieure du bras 20, et le carter 32 comporte en sa partie supérieure deux pions d'accrochage 40 et 41 dirigés vers le bas adaptés à s'engager respectivement dans les trous 38 et 39 lors de la mise en place du carter 32 sur le siège 34. Ce siège 34 porte en sa région inférieure un verrou mobile 42 de retenue du carter 32 ; ce verrou 42 est susceptible d'occuper, soit une position de verrouillage (figure 3) pour laquelle il assure l'assemblage du carter 32 avec le bras 20, soit une position de déverrouillage (figure 2) pour laquelle le carter 32 est libéré et peut donc être enlevé du bras 20. Le verrou 42, que l'on voit bien sur la figure 4, est constitué par une barrette métallique montée coulissante horizontalement dans le bras 20 selon une direction transversale à ce bras. Cette barrette présente à cet effet deux boutonnières oblongues espacées 44, tandis que le bras 20 porte deux tétons de guidage 46 sur lesquels sont enfilées les boutonnières 44. Cette barrette présente en outre deux mentonnets 48 adaptés respectivement à venir en prise simultanément avec deux crans de verrouillage 50 pratiqués à la partie inférieure du carter 32 ; ces crans 50 sont constitués par des méplats pratiqués respectivement dans les surfaces latérales de deux ergots verticaux espacés 52 solidaires du carter 32.

Le verrou 42 est en relation, par l'intermédiaire d'une biellette 54, avec la touche de commande 56 d'un interrupteur 58 d'alimentation du moteur 18 et de la résistance de chauffage 19, de telle sorte que, pour la position de verrouillage du verrou 42 (figure 3) l'interrupteur 58 soit fermé et le moteur 18 ainsi que la résistance 19 soient alimentés, et que, pour la position de déverrouillage du verrou 42 (figure 2), l'interrupteur 58 soit ouvert et l'alimentation du moteur 18 et de la résistance 19 soit interrompue. La biellette 54 pivote en 59 dans le bras 20 et est en prise en 61 avec le verrou 42.

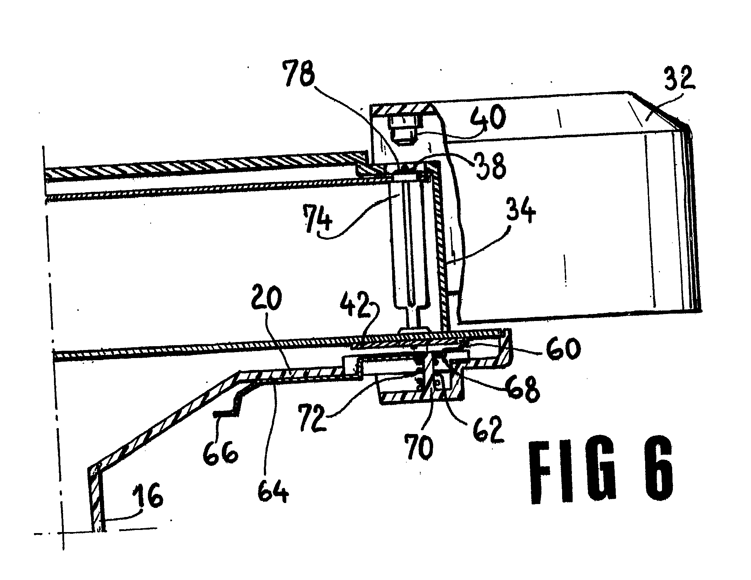

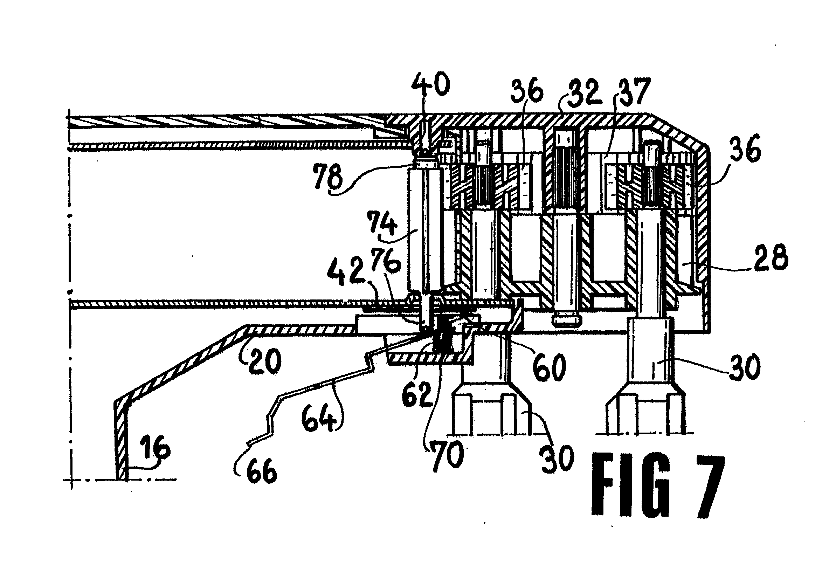

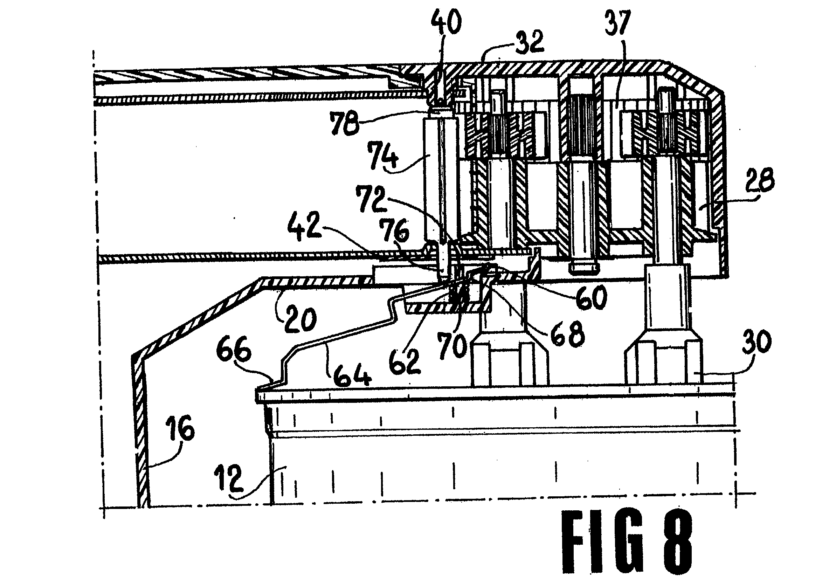

Le bras 20 renferme un loquet 60 d'immobilisation du verrou 42, ce loquet étant adapté à occuper : soit une position active (figures 6 et 7) pour laquelle ce loquet 60 immobilise le verrou 42 en sa position de déverrouillage (figure 2) et en laquelle il se place automatiquement sous l'effet d'un ressort 62, non seulement lorsque le carter 32 est absent de son siège 34 (figure 6), mais aussi lorsque, après mise en place de ce carter sur ce siège, le bol de travail 12 est absent du socle 10 (figure 7) ; soit une position de libération du verrou 42 en laquelle ce loquet 60 est amené par les actions conjuguées du carter 32, lorsque ce carter est sur son siège 34, et du bol 12, lorsque ce bol est sur son socle 10 (figure 1 et 8). On notera que, pour la position active, le loquet 60 est en prise avec une butée 63 ménagée sur le verrou 42.

Le loquet 60 est constitué par une extrémité relevée d'un levier 64 dont l'autre extrémité 66 est saillante sous la face inférieure du bras 20, et qui repose, en un point 68 proche du loquet 60, sur un appui constitué par l'extrémité supérieure du ressort 62 : ce point d'appui du levier est ainsi repoussé élastiquement vers le haut par le ressort 62, l'extrémité inférieure de ce ressort reposant sur une région 70 de la paroi inférieure du bras 20 ; ce ressort est enfilé sur un bossage de guidage 72 qui traverse également une lumière pratiquée dans le levier 64.

Le bras 20 renferme également une tige de commande 74 coulissant verticalement, dont l'extrémité inférieure 76 est en prise avec le levier 64 en un point situé entre l'appui élastique 62 et l'extrémité saillante 66, et dont l'extrémité supérieure 78 est située en regard du trou 38 recevant le pion 40 d'accrochage du carter 32, de telle sorte que ce pion vienne en prise avec cette extrémité 78 lors de la mise en place du carter 32 le siège 34.

Lorsque le carter 32 est absent de son siège 34 (figure 6), le levier 64 occupe, sous l'effet du ressort 62, une position relevée d'escamotage pour laquelle le loquet 60 est en position active tandis que la tige de commande 74, repoussée vers le haut par le levier 64, occupe une position haute.

Lorsque le carter 32 est en place sur son siège 34, mais que le bol 12 est absent du socle 10 (figure 7), la tige 74 est amenée par le carter 32 en une position basse pour laquelle elle amène le levier 64 à basculer sur son appui élastique 62 jusqu'à une position abaissée d'armement pour laquelle son extrémité saillante 66 est amenée dans l'espace d'emplacement du bol 12, tandis que le loquet 60 est maintenu en sa position active.

Lorsque le carter 32 et le bol 12 sont tous deux mis en place (figures 1 et 8), la région supérieure du bol 12 vient en prise avec l'extrémité saillante 66 pour relever légèrement le levier 64 par rapport à la position d'armement de la figure 7, avec basculement du levier 64 autour de l'extrémité inférieure 76 de la tige 74, et déplacement du loquet 60 vers sa position de libération du verrou 42.

En cette position des figures 1 et 8, l'usager peut actionner le verrou 42 selon la flèche G de la figure 2, ceci pour amener les mentonnets 48 à s'engager dans les crans 50 et assurer ainsi le verrouillage du carter 32 sur son siège 34, et pour faire pivoter en même temps la biellette 54 selon la flèche H pour enfoncer la touche 56 de l'interrupteur 58 (figure 3) et assurer ainsi l'alimentation électrique du moteur 18 et de la résistance 19.

Une fois terminé le travail de préparation culinaire, l'usager déplace le verrou 42 en sens contraire de la flèche G, ce qui provoque le déverrouillage du carter 32 et le retour de l'interrupteur 58 à sa position d'ouverture de la figure 2. L'usager peut alors enlever le carter 32 avec les fouets 14 par simple traction de ce carter vers le haut, avec dégagement des pions 40 et 41 hors de leurs trous d'accrochage 38 et 39. Le dégagement du pion 40 entraîne la remontée de la tige de commande 74 ainsi que du levier 64 sous l'effet du ressort 62. Le loquet 60 vient en prise avec la butée 63, interdisant alors à l'usager la manoeuvre du verrou 42 (figure 6). L'usager peut alors enlever le bol 12 pour en récupérer le contenu.

Si l'usager, par inadvertance, place sur l'appareil le carter 32 équipé de ses fouets 14 sans mettre en place le bol 12 sur le socle 10, la manoeuvre du verrou est interdite du fait que le loquet 60 reste en prise avec la butée 63 du verrou 42 (figure 7). Ainsi les fouets 14 ne peuvent pas être mis en rotation tant qu'il ne sont pas protégés par la garde que constitue autour d'eux la paroi latérale du bol 12. Tout risque d'accident provoqué par ces fouets est donc ainsi évité.

**Revendications**

1. Appareil électroménager comportant un socle (10) de réception d'un bol de travail amovible (12), au moins un outil rotatif (14) tel qu'un fouet pénétrant dans ce bol, une colonne (16) s'élevant dudit socle (10) et contenant un moteur (18), cette colonne (16) portant en son sommet un bras (20) qui s'étend horizontalement au-dessus du bol (12) et qui renferme un réducteur de vitesse (22) accouplé au moteur (18) et comprenant une roue de sortie (26) qui vient en prise avec une roue d'entraînement (28) d'un arbre (30) portant l'outil rotatif (14), ladite roue d'entraînement (28) et ledit arbre porte-outil (30) étant contenus dans un carter (32) monté amovible sur un siège (34) ménagé en bout dudit bras (20), de telle sorte que, lors de la mise en place du carter (32) sur ledit siège (34), ladite roue d'entraînement (28) vienne en prise avec ladite roue de sortie (26) du réducteur (22), le carter (32) étant retenu sur son siège (34) par un verrou mobile (42) susceptible d'occuper, soit une position de verrouillage pour laquelle il assure l'assemblage du carter (32) avec le bras (20), soit une position de déverrouillage pour laquelle le carter (32) est libéré, ce verrou (42) est en relation avec la touche de commande (56) d'un interrupteur (58) d'alimentation du moteur (18) de telle sorte que, pour ladite position de verrouillage, ledit interrupteur (58) soit fermé et le moteur (18) soit alimenté, et que, pour ladite position de déverrouillage, ledit interrupteur (58) soit ouvert et l'alimentation du moteur (18) soit donc interrompue.

2. Appareil électroménager selon la revendication 1,
**caractérisé** en ce que le verrou mobile (42) est monté dans le bras (20).

3. Appareil électroménager selon la revendication 2,
**caractérisé** en ce que le bras (20) renferme un loquet (60) d'immobilisation du verrou (42), adapté à occuper , soit une position active pour laquelle il immobilise le verrou (42) en sa position de déverrouillage et en laquelle il se place automatiquement sous l'effet d'un ressort (62), non seulement lorsque le carter (32) est absent de son siège (34), mais aussi lorsque, après mise en place de ce carter (32) sur ce siège (34) le bol de travail (12) est absent du socle (10), soit une position de libération du verrou (42) en laquelle il est amené par les actions conjuguées du carter (32), lorsque ce carter (32) est en place sur son siège (34), et du bol (12), lorsque ce bol (12) est en place sur son socle (10).

4. Appareil électroménager selon la revendication 3,
**caractérisé** en ce que, le loquet (60) étant constitué par une extrémité d'un levier (64) dont l'autre extrémité (66) est saillante sous la face inférieure du bras (20) et qui repose, en un point (68) proche du loquet (60), sur un appui repoussé élastiquement vers le haut par le ressort (62), le bras (20) renferme une tige de commande (74) coulissant verticalement, dont l'extrémité inférieure (76) est en prise avec le levier (64) en un point situé entre ledit appui élastique (62) et ladite extrémité saillante (66), et dont l'extrémité supérieure (78) peut venir en prise avec le carter (32), de telle sorte que :lorsque le carter (32) est absent de son siège (34), le levier (64) occupe sous l'effet du ressort (62) une position relevée d'escamotage pour laquelle le loquet (60) est en position active tandis que la tige de commande (74), repoussée vers le haut par le levier (64), occupe une position haute ; lorsque le carter (32) est en place sur son siège (34) mais que le bol (12) est absent du socle (10), ladite tige (74) est amenée par le carter (32) en une position basse pour laquelle elle amène le levier (64) à basculer sur son appui élastique (62) jusqu'à une position abaissée d'armement pour laquelle son extrémité saillante (66) est amenée dans l'espace d'emplacement du bol (12) tandis que le loquet (60) est maintenu en sa position active ; et lorsque le carter (32) et le bol (12) sont tous deux mis en place, la région supérieure du bol (12) vient en prise avec ladite extrémité saillante (66) pour relever légèrement ce levier (64) par rapport à la position d'armement avec basculement de ce levier (64) autour de l'extrémité inférieure (76) de la tige (74) et déplacement du loquet (60) vers sa position de libération du verrou (42).

5. Appareil électroménager selon l'une quelconque des revendications 2 à 4,
**caractérisé** en ce que, le siège (34) de réception du carter (32) comprenant au moins un trou (38, 39) pratiqué dans la face supérieure du bras (20), et le carter (32) comportant en sa partie supérieure un pion d'accrochage (40, 41) dirigé vers le bas adapté à s'engager dans ledit trou (38,39) lors de la mise en place du carter (32) sur le siège (34), le verrou (42) vient en prise avec au moins un cran de verrouillage (50) pratiqué dans la partie inférieure du carter (32).

6. Appareil électroménager selon les revendications 4 et 5,
**caractérisé** en ce que l'extrémité supérieure (78) de la tige de commande (74) est située en regard du trou (38) recevant le pion d'accrochage (40), de telle sorte que ce pion (40) vient en prise avec cette extrémité (78) de la tige (74) lors de la mise en place du carter (32) sur son siège (34).

7. Appareil électroménager selon la revendication 5,
**caractérisé** en ce que le verrou (42) est monté coulissant horizontalement selon une direction transversale au bras (20) et vient en prise simultanément avec deux crans de verrouillage (50) pratiqués respectivement dans les surfaces latérales de deux ergots verticaux espacés (52) solidaires du carter (32).

8. Appareil électroménager selon l'une quelconque des revendications précédentes,
**caractérisé** en ce que, le socle (10) comportant une résistance électrique (19) de chauffage du fond du bol (12), l'interrupteur (58) commande également l'alimentation de cette résistance (19).

**Patentansprüche**

1. Elektrohaushaltsgerät mit einem Sockel (10) zur Aufnahme einer abnehmbaren Arbeitsschüssel (12), mit mindestens einem drehbaren Werkzeug (14), wie einem in diese Schüssel reichenden Rührer, einer Säule (16), die sich vom Sockel (10) nach oben erstreckt und einen Motor (18) enthält, wobei diese Säule (16) an ihrem Kopf einen Arm (20) trägt, der sich oberhalb der Schüssel (12) waagerecht erstreckt und ein Untersetzungsgetriebe (22) umschließt, das mit dem Motor (18) gekuppelt ist und ein Abtriebsrad (26) aufweist, das mit einem Antriebsrad (28) einer das drehbare Werkzeug (14) tragenden Welle (30) in Eingriff kommt, wobei das Antriebsrad (28) und die Werkzeugträgerwelle (30) in einem Gehäuse (32) enthalten sind, das an einem am Ende des Armes (20) ausgebildeten Sitz (34) abnehmbar so angebracht ist, daß beim Ansetzen des Gehäuses (32) an den Sitz (34) das Antriebsrad (28) mit dem Abtriebsrad (26) des Untersetzungsgetriebes (22) in Eingriff kommt, wobei das Gehäuse (32) an seinem Sitz (34) durch einen beweglichen Riegel (42) zurückgehalten ist, der entweder eine Verriegelungsstellung, der der er den Zusammenhalt des Gehäuses (32) mit dem Arm (20) gewährleistet, oder eine Entriegelungsstellung einnehmen kann, in welcher das Gehäuse (32) freigegeben ist, wobei dieser Riegel (42) in solcher Weise in Beziehung steht mit dem Betätigungsknopf (56) eines Schalters (58) zum Einschalten des Motors (18), daß in der Verriegelungsstellung der Schalter (58) geschlossen und der Motor (18) eingeschaltet ist und in der Entriegelungsstellung der Schalter (58) offen und der Motor (18) somit ausgeschaltet ist.

2. Elektrohaushaltsgerät nach Anspruch 1, dadurch gekennzeichnet, daß der bewegliche Riegel (42) im Arm (20) montiert ist.

3. Elektrohaushaltsgerät nach Anspruch 2, dadurch gekennzeichnet, daß der Arm (20) eine Falle (60) zum Feststellen des Riegels (42) umschließt, die entweder eine wirksame Stellung einnehmen kann, in der sie den Riegel (42) in seiner Entriegelungsstellung festlegt und in die sie automatisch unter der Wirkung einer Feder (62) gebracht wird, nicht nur, wenn das Gehäuse (32) sich nicht auf seinem Sitz (34) befindet, sondern auch, wenn nach dem Ansetzen des Gehäuses (32) an diesen Sitz (34) die Arbeitsschüssel (12) sich nicht auf dem Sockel (10) befindet, oder eine Freigabestellung des Riegels (42) einnehmen kann, in die sie durch die gemeinsamen Wirkungen des Gehäuses (32), wenn sich dieses Gehäuse (32) am Platz an seinem Sitz (34) befindet, und der Schüssel (12), wenn diese Schüssel (12) sich am Platz auf ihrem Sockel (10) befindet, gebracht wird.

4. Elektrohaushaltsgerät nach Anspruch 3, dadurch gekennzeichnet, daß die Falle (60) von einem Ende eines Hebels (64) gebildet ist, dessen anderes Ende (66) unter der unteren Fläche des Arms (20) vorspringt und der an einem nahe bei der Falle (60) befindlichen Punkt (68) auf einer Auflage ruht, die durch die Feder (62) elastisch nach oben gedrückt ist, und daß der Arm (20) eine senkrecht verschiebbare Steuerstange (74) umschließt, deren unteres Ende (76) an einem zwischen der elastischen Auflage (62) und dem vorspringenden Ende (66) gelegenen Punkt in Eingriff mit dem Hebel (64) ist und deren oberes Ende (78) mit dem Gehäuse (32) in Eingriff kommen kann, so daß, wenn das Gehäuse (32) sich nicht an seinem Sitz (34) befindet, der Hebel (64) unter der Wirkung der Feder (62) eine angehobene weggeklappte Stellung einnimmt, in welcher sich die Falle (60) in wirksamer Stellung befindet, während die Steuerstange (74), die durch den Hebel (64) nach oben gedrückt ist, eine obere Stellung einnimmt; wenn dagegen das Gehäuse (32) am Platz an seinem Sitz (34) ist, jedoch die Arbeitsschüssel (12) sich nicht auf dem Sockel (10) befindet, die Steuerstange (74) durch das Gehäuse (32) in eine untere Stellung gebracht ist, in der sie den Hebel (64) um seine elastische Auflage (62) bis in eine abgesenkte Rüststellung schwenken läßt, in welcher sein vorstehendes Ende (66) in den Stellplatz der Schüssel (12) gebracht ist, während die Falle (60) in ihrer aktiven Stellung gehalten ist; und wenn schließlich das Gehäuse (32) und die Schüssel (12) alle beide am Platz sind, der obere Bereich der Schüssel (12) in Eingriff mit dem vorstehenden Ende (66) kommt, um diesen Hebel (64) bezüglich seiner Rüststellung etwas anzuheben, wobei dieser Hebel (64) um das untere Ende (76) der Steuerstange (74) schwenkt und die Falle (60) in ihre Freigabestellung des Riegels (42) bewegt.

5. Elektrohaushaltsgerät nach einem der Ansprüche 2 bis 4, dadurch gekennzeichnet, daß der Sitz (34) zur Aufnahme des Gehäuses (32) mindestens ein in der oberen Fläche des Arms (20) ausgebildetes Loch (38, 39) aufweist, das Gehäuse (32) in seinem oberen Bereich einen nach unten gerichteten Haltezapfen (40, 41) aufweist, der in das Loch (38, 39) beim Ansetzen des Gehäuses (32) an seinen Sitz (34) eingreifen kann, und daß der Riegel (42) mit mindestens einer Rastkerbe (50) zur Verriegelung in Eingriff kommt, die im unteren Teil des Gehäuses (32) ausgebildet ist.

6. Elektrohaushaltsgerät nach den Ansprüchen 4 und 5, dadurch gekennzeichnet, daß das obere Ende (78) der Steuerstange (74) gegenüber dem Loch (38) zur Aufnahme des Haltezapfens (40) so angeordnet ist, daß dieser Haltezapfen (40) beim Ansetzen des Gehäuses (32) an seinen Sitz (34) in Eingriff mit diesem Ende (78) der Steuerstange (74) kommt.

7. Elektrohaushaltsgerät nach Anspruch 5, dadurch gekennzeichnet, daß der Riegel (42) waagerecht in einer quer zum Arm (20) verlaufenden Richtung verschiebbar montiert ist und gleichzeitig mit zwei Verriegelungsrasten (50) in Eingriff kommt, die jeweils in den Seitenflächen zweier voneinander entfernter und mit dem Gehäuse (32) fest verbundener senkrechter Zapfen (52) ausgebildet sind.

8. Elektrohaushaltsgerät nach einem der vorangehenden Ansprüche, dadurch gekennzeichnet, daß der Sockel (10) einen elektrischen Widerstand (19) zum Erwärmen des Bodens der Schüssel (12) aufweist und der Schalter (58) auch diesen Widerstand ein- und ausschaltet.

## Claims

1. A domestic electric appliance comprising a base (10) for receiving a removable work bowl (12), at least one rotating tool (14) such as a whisk penetrating into the bowl, and a column (16) rising from the said base (10) and containing a motor (18), this column (16) carrying at its top an arm (20) which extends horizontally above the bowl (12) and which encloses a speed reducer (22) coupled to the motor (18) and comprising an output wheel (26) which becomes engaged with a driving wheel (28) of a shaft (30) carrying the rotating tool (14), the said driving wheel (28) and the said tool-carrying shaft (30) being contained in a casing (32) mounted removably on a seat (34) made at the end of the said arm (20) in such a way that, when the casing (32) is installed on the said seat (34), the said driving wheel (28) becomes engaged with the said output wheel (26) of the speed reducer (22), the casing (32) being retained on its seat (34) by a movable latch (42) able to occupy either a locking position in which it provides the mounting of the casing (32) on the arm (20), or an unlocking position in which the casing (32) is released, the latch (42) is connected to the control button (56) of a switch (58) of the supply to the motor (18) in such a way that in the said locking position the said switch (58) is closed and the motor (18) is supplied, and in the said unlocking position the said switch (58) is open and the supply to the motor (18) is thus interrupted.

2. A domestic electric appliance according to Claim 1, characterized in that the movable latch (42) is mounted in the arm (20).

3. A domestic electric appliance according to Claim 2, characterized in that the arm (20) encloses a catch (60) for immobiling the lach (42), adapted to occupy either an engaged position in which it immobilizes the latch (42) in its unlocking position, and in which it is placed automatically by the action of a spring (62), not only when the casing (32) is absent from its seat (34), but also when, after installing the casing (32) on the seat (34) the work bowl (12) is absent from the base (10), or a position with the latch (42) freed into which it is brought by the combined actions of the casing (32), when the casing (32) is in place on its seat (34), and of the bowl (12), when the bowl (12) is in place on its base (10).

4. A domestic electric appliance according to Claim 3, characterized in that the catch (60) being constituted by an end of a lever (64) the other end of which (66) projects under the lower surface of the arm (20) and which rests, at a position (68) close to the catch (60), on a bearing pushed back elastically upwards by the spring (62), the arm (20) encloses a control rod (74) able to slide vertically, the lower end of which (76) is engaged with the lever (64) at a position situated between the said elastic bearing (62) and the said projecting end (66), and the upper end (78) of which may become engaged with the casing (32) in such a way that: when the casing (32) is absent from its seart (34), the lever (64), under the action of the spring (62), occupies a raised retracted position in which the catch (60) is in an operative position whereas the control rod (74), pushed back upwards by the lever (64) occupies an elevated position; when the casing (32) is in place on its seat (34) but the bowl (12) is absent from the base (10), the said rod (74) is brought by the casing (32) into a low position in which it causes the lever (64) to tip on its elastic bearing (62) as fas as a lowered loading position in which its projecting end (66) is brought into the space for positioning the bowl (12), whereas the catch (60) is retained in its operative position; and when the casing (32) and the bowl (12) are both put in place, the upper region of the bowl (12) becomes engaged with the said projecting end (66) to raise the lever (64) slightly relative to the position for loading with tipping of this lever (64) around the lower end (76) of the rod (74) and displacement of the catch (60) towards its position with the latch (42) freed.

5. A domestic electric appliance according to any one of Claims 2 to 4, characterized in that the seat (34) for receiving the casing (32) comprises at least one hole (38, 39) made in the upper surface of the arm (20) and, the casing (32) comprising in its upper part a hooking-on stud (40, 41) facing downwards adapted to engage in the said hole (38, 39), when the casing (32) is installed on the seat (34), the latch (42) becomes engaged with at least one locking notch (50) made in the lower part of the casing (32).

6. A domestic electric appliance according to Claims 4 and 5, characterized in that the upper end (78) of the control rod (74) is situated facing the hole (38) receiving the hooking-on stud (40) in such a way that the stud (40) becomes engaged with this end (78) of the rod (74) when the casing (32) is installed on its seat (34).

7. A domestic electric according to Claim 5, characterized in that the latch (42) is mounted to slide horizontally in a direction transverse to the arm (20) and becomes engaged simultaneously with two locking notches (50) made respectively in the lateral surface of two separated vertical pegs (52) integral with the casing (32).

8. A domestic electric appliance according to any one of the preceding Claims, characterized in that the base (10) comprises an electrical resistance (19) for heating the bottom of the bowl (12) and the switch (58) also controls te supply to this resistance.

FIG 1

EP 0 240 842 B1

FIG 2

**FIG 3**

**FIG 4**

**FIG 5**

FIG 6

EP 0 240 842 B1

FIG 7

EP 0 240 842 B1

FIG 8

EP 0 240 842 B1